# EUROPÄISCHE PATENTANMELDUNG

(11) **EP 0 893 652 A1**
(43) Veröffentlichungstag der Anmeldung: **27.01.1999**
(21) Anmeldenummer: 98112020.7
(22) Anmeldetag: 30.06.1998
(51) Int. Cl.: F23G 5/033

(54) **Verfahren zur thermischen Verwertung von kunststoffhaltigen Abfallstoffen, insbesondere aus der Altkraftfahrzeug-Verwertung.**

(30) Priorität: 24.07.1997 DE 19731874
(71) Anmelder: Krupp Uhde GmbH, 44141 Dortmund (DE)
(72) Erfinder: Liu, Ci, 44809 Bochum (DE); Mork, Michael, 58239 Schwerte (DE)
(74) Vertreter: Patentanwälte Meinke, Dabringhaus und Partner

(57) **Zusammenfassung**

Mit einem Verfahren zur thermischen Behandlung von kunststoffhaltigen Abfallstoffen, insbesondere aus der Verwertung von Altkraftfahrzeugen, wobei die Abfallstoffe zunächst zerkleinert und nachfolgend einer thermischen Behandlung zugeführt werden, soll eine Lösung geschaffen werden, mit der grobkörniges, feinkörniges und staubförmiges Material verarbeitet werden kann, ohne insbesondere mechanische und thermische Nachteile in Kauf nehmen zu müssen.

Dies wird dadurch erreicht, daß die Altkraftfahrzeuge od. dgl. verpreßt (6) und nachfolgend geschreddert und die Leichtfraktion in einer weiteren Stufe erneut verpreßt (6) und dann zerkleinert (8), homogenisiert und im Wassergehalt reduziert und in einer nachfolgenden Stufe thermisch verwertet wird (13).

## Beschreibung

Die Erfindung richtet sich auf ein Verfahren zur thermischen Behandlung von kunststoffhaltigen Abfallstoffen, insbesondere aus der Altkraftfahrzeug-Verwertung, wobei die Abfallstoffe zunächst zerkleinert und nachfolgend einer thermischen Behandlung zugeführt werden.

Aus der DE-C-43 39 973 ist ein Verfahren zur Vergasung von Abfallstoffen bekannt. Dabei werden feste Abfallstoffe, genannt ist dort auch Kunststoff und Kohle, in gleicher Korngröße miteinander vermischt, und mittels O₂-haltigem Gas und Wasserdampf in einem HTW-Vergaser vergast. Weitere Abfallaufbereitungsverfahren sind beispielsweise aus der DE-195 20 085-C1, der DE-44 02 025-A1 oder der US-4 270 470 bekannt.

Ein Problem von kunststoffhaltigen Abfallstoffen besteht darin, daß Kunststoffe stark aufgebauscht und in unterschiedlichen Formen vorliegen, wie Schaumstoffe, Textiliengewebe, Folien od. dgl., was zu sehr niedriger Schüttdichte des Materiales führt. Ein weiterer Nachteil besteht darin, daß Kunststoffe häufig vergleichsweise hohe Mengen an Feuchtigkeit aufweisen und mit Materialien durchsetzt sein können, die zu der Möglichkeit einer thermischen Verwertung nichts oder wenig beitragen, wie Drähte, Metallspäne, Glassplitter, mineralische Stoffe od. dgl.

Damit erschwert sich die mechanische Handhabung derartiger Materialien, die aus Wertstoffsammelsystemen oder der Verwertung von Kraftfahrzeugen, Haushaltsgeräten od. dgl. stammen. Die Separierung von Metallen ist wegen des mechanischen Verbundes mit den Kunststoffen nicht oder häufig nur sehr schwer möglich. Die Zerkleinerung derartiger Stoffe kann daher nicht mit schneidenden Verfahren durchgeführt werden, da Schneidwerkzeuge durch niedrig schmelzende Kunststoff-Fraktionen rasch verkleben bzw. durch Metalle oder Mineralien in den Ausgangsstoffen zerstört werden können. Solche Störfälle können zum Stillstand entsprechender Zerkleinerungsanlagen führen. Brechende Zerkleinerungsverfahren entfallen wegen der elastischen Eigenschaften der Kunststoffe. Somit ist eine thermische Verwertung derartiger Abfallstoffe in sämtlichen Verfahren erheblich erschwert, die eine vorherige Zerkleinerung der Abfallstoffe zu stückigem, feinkörnigem oder staubkörnigem Material erfordern.

Ein weiterer Nachteil bekannter Verfahren liegt darin, daß es bei der thermischen Verwertung derartiger Abfallstoffe beispielsweise in Festbettprozessen zu lokalen Temperaturspitzen wegen der Inhomogenität des Materiales kommen kann, während grobstückige Bestandteile solcher Abfallstoffe in Festbettprozessen häufig nur unvollständig verwertbar sind, feinkörniges oder staubförmiges Material läßt sich ebenfalls dort nicht verwerten, da es durch die Roste einer Festbettanlage fällt.

Aufgabe der Erfindung ist die Schaffung einer Lösung zur thermischen Behandlung von kunststoffhaltigen Abfallstoffen, die mit Materialien, wie Drähte, Metallspäne, Glassplitter, mineralische Stoffe od. dgl., durchsetzt sein können, ohne hieraus insbesondere mechanische und thermische Nachteile in Kauf nehmen zu müssen.

Mit einem Verfahren der eingangs bezeichneten Art wird diese Aufgabe gemäß der Erfindung dadurch gelöst, daß die Altkraftfahrzeuge od. dgl. verpreßt und nachfolgend geschreddert und die Leichtfraktion in einer weiteren Stufe erneut verpreßt und dann zerkleinert, homogenisiert und im Wassergehalt reduziert und in einer nachfolgenden Stufe thermisch verwertet wird, vorzugsweise in einem Wirbelschichtprozeß.

Bei der Altkraftfahrzeug-Verwertung ist es bekannt, zunächst aus den Fahrzeugen Motor- und Getriebeöl zu entsorgen, die Batterien auszubauen und soweit wie möglich die Räder und Reifen zu entfernen, ggf. werden auch Teile der leicht zu demontierenden Kunststoffteile und Scheiben entnommen. Soweit wie möglich werden die von Fremdstoffen befreiten Metallteile verpreßt und z.B. in Hochöfen weiterverarbeitet, wobei man dort Kunststoffe wegen der bei der Verbrennung entstehenden Schadstoffe nicht einsetzen kann bzw. einsetzen will.

Hier setzt die Erfindung an, bei der es nicht mehr notwendig ist, Kunststoffe aus den Erst-Presslingen zu entfernen. Nach wie vor werden die Schmier- und Brennstoffe sowie die Batterie mit ihrer Säure und ihrem Bleigehalt entfernt. Der Pressling aus dem Gemisch aus Metall und Kunststoff wird dann geschreddert, wobei allein durch das Schreddern eine Separierung in eine Leicht- und eine Schwerfraktion vorgenommen wird. Die Schwerfraktion besteht im wesentlichen aus Metallschrott, die Leichtfraktion aus einem Stoffgemisch, insbesondere aus Kunststoff, Kupferdrähten u. dgl. In dieser Leichtfraktion befinden sich auch Teile der Autoelektronik, der Sitze, der Radkästen, von Gummi, Glas und Dichtungen. Ein ähnliches Stoffgemisch ergibt sich z.B. bei der Entsorgung von Waschmaschinen, Kühlschränken, Elektroherden, Computern od. dgl.

Durch die nachfolgende Behandlungsstufe, nämlich das erneute Verpressen zu Presslingen unter hohem Druck, ergibt sich eine Versprödung der Kunststoffteile, so daß sich diese bei nachfolgender erneuter Zerkleinerung in äußerst einfacher Weise von den Metallteilen trennen lassen.

Vorteilhaft ist es dabei, wenn die groben Bestandteile der kunststoffhaltigen Abfallstoffe zunächst in einer Kompaktierungsstufe unter hohem Druck, z.B. von 500 bis 600 bar, zu Presslingen verpreßt und diese Presslinge anschließend für den thermischen Prozeß weiter konditioniert werden, wie dies die Erfindung in Ausgestaltung vorsieht.

Die thermische Verwertung in einem Wirbelschichtprozeß hat den Vorteil, daß grobstückige Bestandteile durch das Wirbelbettmaterial zerkleinert werden und damit weitestgehend thermisch verwertbar sind. Gleichzeitig eignen sich derartige Prozesse aber auch zur thermischen Verwertung von feinkörnigem bzw. staubkörnigem Material, wobei durch die guten Wärme- und Stofftransporteigenschaften von Wirbelschichten Temperaturspitzen innerhalb des Prozesses sicher vermieden werden können. Die thermische Verwertung als staubkörniges Material erlaubt ein vorteilhaftes Erschmelzen der im Material enthaltenen Inertstoffe innerhalb dieses thermischen Prozesses, erfordert jedoch eine weitergehende Aufbereitung des Materials. Aufgrund der erfindungsgemäßen Aufbereitung der eingesetzten Abfallstoffe ist diese Aufmahlung zu staubkörnigem Material unter Vermeidung der zuvor erwähnten Nachteile hier sehr wohl möglich.

Das Material läßt sich innerhalb der erfindungsgemäßen Aufbereitung jedoch auch so homogenisieren und konditionieren, daß es unter Vermeidung der zuvor erwähnten Nachteile in einem Festbettprozeß thermisch verwertet werden kann. Daher sollen sowohl thermische Prozesse, die eine Aufbereitung zu einem staubkörnigen Material erfordern, als auch Festbettprozesse, Wanderbettprozesse od. dgl. innerhalb dieser Erfindung nicht grundsätzlich ausgeschlossen werden. Dabei kann aufgrund der erfindungsgemäßen Aufbereitung der eingesetzten Abfallstoffe der thermische Prozeß sowhl unter Unterdruck, Atmosphärendruck oder Überdruck betrieben werden.

Weitere Ausgestaltungen der Erfindung ergeben sich aus den Unteransprüchen, wonach es zweckmäßig sein kann, in einer ersten Separierstufe der Vorbehandlungsstufe ein Feinkorn- bzw. eine Feinfraktion aus dem kunststoffhaltigen Abfallstoff auszuscheiden, um diese z.B. unmittelbar der thermischen Verwertung zuzführen und die groberen Bestandteile z.B. zu verpressen und dann zu zerkleinern.

Die Presslinge können in Extrudern, Brikettiermaschinen, Schneckenpressen, Pelletierpressen od. dgl. hergestellt werden und zweckmäßigerweise in Zerkleinerungsanlagen, wie Hammermühlen od. dgl., zerkleinert werden. Die Trennung von Metallen nach dem Zerkleinerungsschritt kann aufgrund ihres spezifischen Gewichtes beispielsweise durch Windsichten aber auch durch magnetische oder wirbelstrommagnetische Separierverfahren erfolgen u. dgl. mehr.

Das aufbereitete Material kann zur Erzeugung von Wärme in Form von Dampf eingesetzt werden oder beispielsweise unter reduzierten Bedingungen in wasserstoff- und kohlenmonoxidhaltiges Gas umgesetzt werden, wobei dann dieses Gas als Brenngas zur Wärmeerzeugung und/oder Krafterzeugung und/oder als Rohgas für chemische Synthesen einsetzbar ist.

Auch kann das Material thermo-chemisch verwertet werden, wie beispielsweise im Rahmen von Pyrolysen, Depolimerisationen, Cracken, Hydrierungen oder Redox-Reaktionen.

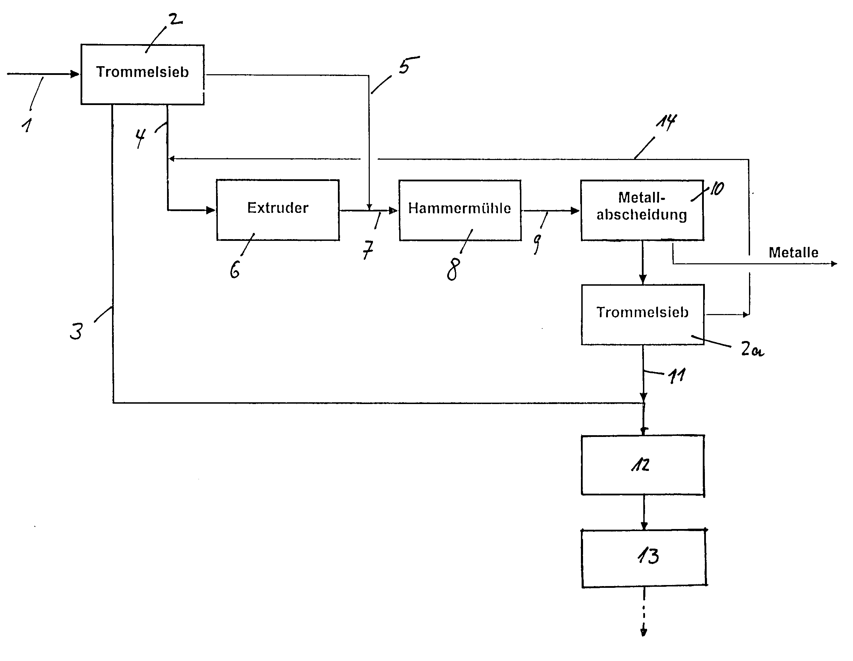

Die Erfindung ist nachstehend anhand der Zeichnung beispielsweise näher erläutert. Diese zeigt in der einzigen Figur ein Systemfließbild in stark vereinfachter Form.

Im dargestellten Beispiel wird das zu behandelnde Gut bei 1 einem Trommelsieb 2 zugeführt, indem Feinkorn über die Leitung 3, Grobkorn über die Leitung 4 und Überkorn über die Leitung 5 abgezogen wird.

Das Grobkorn über die Leitung 4 wird einem Extruder 6 zugeführt und dort, z.B. mit einem Druck von 500 bar, brikettiert und die brikettierten Teile mit dem Überkorn über die Leitung 7, z.B. einer Hammermühle 8, zur Zerkleinerung aufgegeben.

Das in der Hammermühle zerkleinerte Material wird über die Leitung 9 einer Metallabscheidung 10 zugeführt und kann, wie dargestellt, nochmals über ein Trommelsieb 2a fraktioniert werden, wobei das Feinkorn über die Leitung 11 mit dem Feinkorn aus dem Trommelsieb 2 zusammengefaßt und gemeinsam einem Wirbelschichtprozeß zugeführt wird. Der thermische Prozeß ist lediglich mit 13 angedeutet, dem weitere Aufbereitungsstufen 12 vorgeschaltet sein und Verwertungsstufen 14 folgen können.

Erkennbar kann noch Korn aus dem Trommelsieb 2a, wenn es nicht die gewünschte Größe aufweist, über eine Leitung 14 vor den Extruder 6 zurückgeführt und damit einer erneuten Brikettierung unterworfen werden.

Lediglich als Beispiel sei angegeben, daß hier Feinkorn eine Partikelgröße von < 10 mm, Grobkorn eine Partikelgröße von 10 bis 100 mm und Überkorn eine Partikelgröße von über 100 mm aufweisen kann, natürlich sind auch andere Partikelgrößeneinteilungen möglich.

## Patentansprüche

1. Verfahren zur thermischen Behandlung von kunststoffhaltigen Abfallstoffen, insbesondere aus der Verwertung von Altkraftfahrzeugen, wobei die Abfallstoffe zunächst zerkleinert und nachfolgend einer thermischen Behandlung zugeführt werden,
dadurch gekennzeichnet,
daß die Altkraftfahrzeuge od. dgl. verpreßt und nachfolgend geschreddert und die Leichtfraktion in einer weiteren Stufe erneut verpreßt und dann zerkleinert, homogenisiert und im Wassergehalt reduziert und in einer nachfolgenden Stufe thermisch verwertet wird.

2. Verfahren nach Anspruch 1,
dadurch gekennzeichnet,
daß die groberen Bestandteile der kunststoffhaltigen Abfallstoffe zunächst in einer Kompaktierungsstufe und hohem Druck zu Presslingen verpreßt und diese Presslinge anschließend in eine im thermischen Prozeß verarbeitbare Größe zerkleinert werden.

3. Verfahren nach Anspruch 1 oder 2,
dadurch gekennzeichnet,
daß in einer Separierstufe ein Feinkorn bzw. eine Feinfraktion aus dem kunststoffhaltigen Abfallstoff ausgeschieden wird und die groberen Bestandteile einer weiteren Behandlung zugeführt werden.

4. Verfahren nach Anspruch 3,
dadurch gekennzeichnet,
daß die Presslinge in Extrudern, Brikettiermaschinen, Schneckenpressen, Pelletierpressen od. dgl., hergestellt werden, wobei die für diesen Vorgang erforderliche Erwärmung des Materiales beispielsweise durch Reibung innerhalb der Maschine, aber auch durch Wärmezufuhr von außen erfolgt, wobei diese Erwärmung gleichzeitig zur Trocknung des Materiales einsetzbar ist.

5. Verfahren nach einem der vorangehenden Ansprüche,
dadurch gekennzeichnet,
daß die Presslinge insbesondere in brechenden Zerkleinerungsanlagen, wie beispielsweise Hammermühlen, zerkleinert werden.

6. Verfahren nach einem der vorangehenden Ansprüche,
dadurch gekennzeichnet,
daß nach dem Zerkleinerungsschritt aus der Fraktion Metalle ausgeschieden werden.

7. Verfahren nach Anspruch 6,
dadurch gekennzeichnet,
daß die Trennung der Metalle aufgrund ihres spezifischen Gewichtes beispielsweise durch Windsichten, durch magnetische und wirbelstrommagnetische Separierverfahren oder einer Kombination dieser Verfahren erfolgt für eine Entsorgung oder weitere rohstoffliche Verwertung.

8. Verfahren nach einem der vorangehenden Ansprüche,
dadurch gekennzeichnet,
daß nach der Metallabscheidung eine Fraktionierung vorgenommen und einzelne Fraktionen aus dem Prozeß ausgeschleust und vor die Zerkleinerungsstufe oder die Kompaktierstufe zurückgeführt werden.

9. Verfahren nach einem der vorangehenden Ansprüche,
dadurch gekennzeichnet,
daß das aufbereitete Material zur Erzeugung von Wärme beispielsweise in Form von Dampf oder Heißwasser eingesetzt wird.

10. Verfahren nach einem der vorangehenden Ansprüche,
dadurch gekennzeichnet,
daß das aufbereitete Material unter reduzierten Bedingungen beispielsweise in einer Wirbelschichtvergasung in wasserstoff- und kohlenmonoxidhaltiges Gas umgesetzt wird, wobei dieses Gas als Brenngas zur Wärmeerzeugung und/oder Krafterzeugung und/oder als Rohgas für chemische Synthesen eingesetzt wird.

11. Verfahren nach einem der vorangehenden Ansprüche,
dadurch gekennzeichnet,
daß das aufbereitete Material thermo-chemisch verwertet wird, beispielsweise im Rahmen von Pyrolysen, Depolimerisationen, Cracken, Hydrierungen oder Redox-Reaktionen.
